# EUROPÄISCHE PATENTSCHRIFT

(11) **EP 2 327 238 B1**
(45) Veröffentlichungstag und Bekanntmachung des Hinweises auf die Patenterteilung: **06.11.2013**
(21) Anmeldenummer: 09736374.1
(22) Anmeldetag: 18.09.2009
(51) Int. Cl.: H04W 4/16, H04L 29/06

(54) **VERFAHREN ZUM VERMITTELN VON KOMMUNIKATIONSBEZIEHUNGEN ZU EINEM FUNK-HEIMBEREICH EINES NETZWERKS ZUGEORDNETEN MOBILEN ENDGERÄT**
METHOD FOR SWITCHING COMMUNICATION LINKS TO A MOBILE TERMINAL DEVICE WHICH IS ASSOCIATED WITH A LOCAL RADIO AREA OF A NETWORK
PROCÉDÉ DE TRANSMISSION DE COMMUNICATIONS À UN TERMINAL MOBILE ASSOCIÉ À UNE ZONE D'APPEL LOCAL D'UN RÉSEAU TÉLÉPHONIQUE

(30) Priorität: 19.09.2008 DE 102008047932
(43) Veröffentlichungstag der Anmeldung: 01.06.2011
(73) Patentinhaber: Siemens Enterprise Communications GmbH & Co. KG, 81379 München (DE)
(72) Erfinder: BOZIONEK, Bruno, 33178 Borchen (DE); HANNA, Thomas, 32758 Detmold (DE); KUNTE, Klaus-Josef, 33178 Borchen (DE)
(74) Vertreter: Fritzsche, Thomas
(86) Internationale Anmeldenummer: PCT/EP2009/006767
(87) Internationale Veröffentlichungsnummer: WO 2010/031574

(56) Entgegenhaltungen:
- WO-A1-2007/015068
- WO-A2-2007/038799
- "3rd Generation Partnership Project; Technical Specification Group GSM/EDGE Radio Access Network; Enhanced Generic Access Networks (EGAN) study; (Release 7)" 3GPP STANDARD; 3GPP TR 43.902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V7.0.1, 1. August 2007 (2007-08-01), Seiten 1-134, XP050378353

## Beschreibung

In Netzwerken für mobile Endgerät, insbesondere Telefon- Endgeräte, bzw. in Mobilfunknetzwerken werden in zunehmendem Maße Heimbereiche definiert, in denen von den Betreibern der Netzwerke günstigere Tarife bzw. Gebühren angeboten werden. Der Heimbereich ist meist mit einem Heim- Funkbereich identisch, wobei der Heim- Funkbereich zumindest einer Funkzelle eines Funknetzwerks entspricht. Der günstigere Tarif wird wirksam, sofern sich das mobile Telefon- Endgerät in diesem Funk- Heimbereich befindet. Die Betreiber erhoffen sich durch die angebotenen Funk- Heimbereiche bzw. Heimbereiche eine stärkere Nutzung der mobilen Endgeräte, insbesondere Mobilfunkendgeräte.

Für diese Heimbereiche sind häufig günstige Tarife insbesondere für Kommunikationsbeziehungen innerhalb der Heim- Funkbereiche und in Festnetze vorgesehen. Hierbei werden den Mobilfunkendgeräten bzw. deren Benutzern Pauschaltarife - Flatrates - angeboten, bei denen ein unbegrenztes Telefonieren aus und in den Heimbereich meist mit der Netzadresse - meist die Rufnummer der Festnetze - in und von den Festnetzen möglich ist. Der Heimbereich kann durch den Benutzer der Mobilfunkendgeräte gewählt werden, überwiegend ein Heim- Funkbereich an seinem Wohnort.

Einem Heim- Funkbereich ist eine Sendeeinrichtung bzw. eine Basisstation mit einem Funkbereich zugeordnet, in dem die Sendeeinrichtung in ihren Funkbereich Funksignale mit seiner Kennung bzw. Senderkennung verbreitet. Verwendet ein Mobilfunkendgerät eine Sendeeinrichtung mit dieser Kennung, so befindet es sich in dem Heim- Funkbereich. Da sich die Funkbereiche der Sendeeinrichtungen überlappen, sind die Funkbereiche nicht exakt definiert und die Betreiber der Mobilfunknetze garantieren deshalb eine Mindestgröße des Heim-Funkbereichs.

Die Druckschrift D1, 3GPP TS 43.902 v7.0.1, XP 050378353, offenbart einen Standard betreffend die sogenannten "Enhanced Generic Access Networks" im Rahmen des 3rd Generation Partnership Projects 3GPP.

Die Druckschrift D2, WO 2007/015068 A1, offenbart ein Verfahren zum sogenannten ,"Handover", speziell die Übertragung von Informationen, die dieses Handover betreffen über ein Wide Area Network, beispielsweise über das Internet.

Die Druckschrift D3, WO 2007/038799 A2, offenbart ein Verfahren zur Verwendung von SIP-Nachrichten in sogenannten Location Services.

Wird eine Kommunikationsanforderung aus dem Festnetz mit der Netzadresse des Festnetzes zu dem Mobilfunkendgerät signalisiert, so wird die Signalisierung zu seinem Heim- Funkbereich geleitet. Befindet sich das Mobilfunkendgerät jedoch nicht im Heim- Funkbereich so wird ein Roaming bzw. ein Weiterleiten der Signalisierung von dem Heim- Funkbereich an den Funkbereich im Mobilfunknetzwerk eingeleitet, in dem sich das Mobilfunkendgeräte derzeit befindet. Ein derartiges Roaming bzw. Weiterleiten einer Verbindungsanforderung von einem Funkbereich zu einem weiteren Funkbereich bzw. der damit verbundenen Signalisierung führt zu erhöhten Gebühren, die durch das Einrichten eines Heim- Funkbereichs eigentlich reduziert werden sollten.

Die der Erfindung zugrundeliegende Aufgabe besteht darin, die Gebühren für das Weiterleiten bzw. Roaming von angeforderten Kommunikationsbeziehungen an den Heim- Funkbereich von mobilen Endgeräten, sofern sich die mobilen Endgeräte nicht im Heim- Funkbereich befinden, zu reduzieren. Die Aufgabe wird durch die Merkmale des Anspruchs 1 und 11 gelöst.

Der wesentliche Aspekt des erfindungsgemäßen Verfahrens ist darin zu sehen, dass durch das mobile Endgerät ermittelt wird, ob es sich im Heim- Funkbereich oder in einem weiteren Funkbereich befindet und durch das mobile Endgerät wird der ermittelte Funkbereich einer Applikation des Netzwerks signalisiert. Mit Hilfe der Applikation wird eine über ein weiteres Netzwerk an das mobile Endgerät adressierte Kommunikationsanforderung entweder an dessen Heim- Funkbereich gesteuert oder an den weiteren Funkbereich weitergeleitet oder der Kommunikationsbeziehung angezeigt wird, dass sich das mobile Endgerät nicht im Heim- Funkbereich befindet. Das erfindungsgemäße Verfahren ist insbesondere für mobile Telefon- Endgeräte oder mobile Multimedia- Endgeräte und auch für mobile Endgeräte in Fastnetzen geeignet.

Ein wesentlicher Vorteil der Erfindung ist darin zu sehen, dass mit Hilfe der Applikation im Netzwerk eingehende Kommunikationsanforderungen an den Heimbereich direkt vermittelt oder direkt mit derjenigen Adresse eines Funknetzes weitergeleitet werden, in dessen Funknetz sich das mobile Endgerät befindet. Hierdurch wird das Roaming bzw. Weiterleiten von Kommunikationsversuchen vom Heim- Funkbereich zu einem weiteren Funkbereich vermieden bzw. erheblich reduziert, da mit Hilfe der Applikation im Netzwerk die Kommunikationsverbindungen mit der Adresse des Netzwerks des weiteren Funkbereichs direkt an das mobile Endgerät gesteuert und folglich wirtschaftlicher ist als das durch die Betreiber durchgeführte Roaming.

Gemäß einer Ausgestaltung der Erfindung wird ein durch das mobile Endgerät ermittelter Heim- Funkbereich oder ein weiteres mobiles Netzwerk der Applikation im Netzwerk durch ein netzwerkspezifisches Endgeräte- Protokoll der Applikation im Netzwerk signalisiert oder übermittelt und vorzugsweise wird das netzwerkspezifische Endgeräte- Protokoll bei Netzwerken mit Internetprotokoll durch das standardisierte Session Initial Protocol (SIP) repräsentiert ist, wobei die Signalisierung durch eine erweitere Contact- Parameter aufweisende Register- Anforderung oder eine durch eine erweiterte Parameter aufweisende Register- Anforderung bewirkt wird. Durch diese einfache Erweiterung des standardisierten SIP- Protokolls kann die Signalisierung des Aufenthaltsorts des mobilen Endgeräts der Applikation im Netzwerk signalisiert bzw. mitgeteilt werden.

Die mobilen Endgeräte können auch durch beispielsweise eine JAVA- Applikation die erfinderischen Funktionen bereitstellen. Hierdurch wird ein wirtschaftliches Nachrüsten der mobilen Endgeräte mit dem erfindungsgemäßen Verfahren möglich. Weitere vorteilhafte Weiterbildungen des erfindungsgemäßen Verfahrens und eine erfindungsgemäße Kommunikationsanordnung sind den weiteren Ansprüchen zu entnehmen.

Im Folgenden werden die Erfindung und deren Weiterbildungen anhand zweier zeichnerischen Darstellungen näher erläutert.

Dabei zeigen
- Figur 1: in einem Blockschaltbild eine Kommunikationsanordnung für die Durchführung des erfindungsgemäßen Verfahrens, bei dem sich ein Mobilfunkendgerät innerhalb eines Heim- Funkbereichs befindet und
- Figur 2: eine Kommunikationsanordnung nach Figur 1, bei dem sich das Mobilfunkendgerät außerhalb des Heim- Funkbereichs befindet.

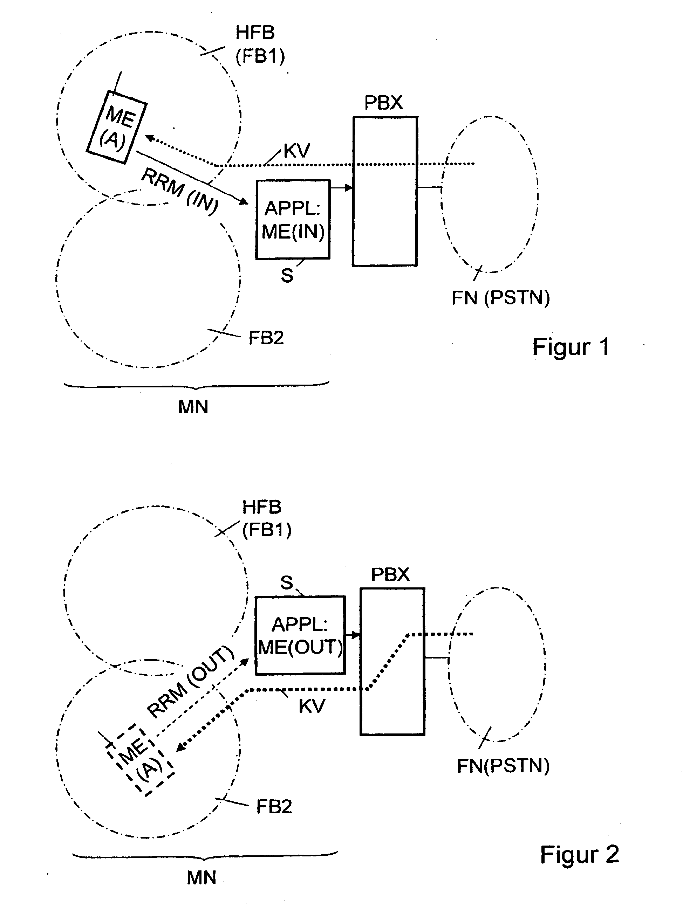

Figur 1 zeigt in einem Blockschaltbild beispielhaft eine Kommunikationsanordnung, in der das erfindungsgemäße Verfahren realisiert ist, wobei nur diejenigen Komponenten dargestellt sind, in denen das erfindungsgemäße Verfahren implementiert ist bzw. die für die Erläuterung des erfindungsgemäßen Verfahrens erforderlich sind.

Figur 1 zeigt beispielhaft für die Erläuterung der Erfindung zwei Funkzellen bzw. Funkbereiche FB1, FB2 eines Mobilfunknetzes MN, wobei das Mobilfunknetz MN durch mehrere Funkzellen gebildet ist. Die Funkbereiche FB1, FB2 sind hierbei durch die Funkreichweite der Basisstationen bzw. deren Sender des jeweiligen Mobilfunknetzes MN bzw. drahtlosen Netzwerks bestimmt. Das Mobilfunknetz MN ist beispielsweise nach einem GSM- oder UMTS- Standard ausgestaltet.

Für das Ausführungsbeispiel sei angenommen, dass für ein mobiles Endgerät ME einer der beiden Funkbereiche FB1, FB2 als Heim- Funkbereich HFB bestimmt ist - in Figur 1 durch die Bezeichnung HFB(FB1) angedeutet. Ein Heim- Funkbereich HFB wird in zunehmendem Maße von den Betreibern der Mobilfunknetze MN angeboten, wobei für ein mobiles Endgerät ME in seinem Heim-Funkbereich HFB günstigere Tarife gelten als im restlichen Mobilfunknetz MN. Auch gelten günstigere Tarif für Verbindungen zum und aus dem Festnetz - insbesondere dem Telefon-Festnetz. Diese günstigeren Tarife gelten, solange sich das mobile Endgerät ME in diesem Heim- Funkbereich HFB bewegt. Wird ein mobiles Endgerät ME aus dem Heim- Funkbereich HFB in einen weiteren Funkbereich FB bewegt, so wird dies durch die jeweiligen Basisstationen des Mobilfunknetzes MN erkannt und auf die üblichen Tarife bzw. Gebühren des Mobilfunknetzes MN umgestellt.

Hierbei kann dem Heim- Funkbereich HFB ein zur Adresse bzw. Rufnummer im Mobilfunknetz MN unterschiedliche Adresse bzw. Rufnummer zugeordnet werden. Diese kann beispielsweise die Adresse oder Rufnummer sein, die einem Teilnehmer des Mobilfunknetzes MN im Festnetz FN zugeordnet ist, sofern er auch im Festnetzes FN subskribiert ist.

Figur 1 zeigt weiterhin einen Server S, in dem eine Applikation APPL realisiert ist, wobei der Server S mit einem Kommunikationssystem KS verbunden ist, die beispielsweise in einem Unternehmen für die Vermittlung von Festnetz- Verbindungen und unternehmensspezifischen drahtlos- Verbindungen vorgesehen ist. Das Kommunikationssystem KS kann Verbindungen zu und aus einem Festnetz FN, beispielsweise ein Telefon- Festnetz PST vermitteln. Der Server S kann funktional auch in das Kommunikationssystem KS als Applikationsserver integriert werden oder funktionaler Bestandteil des Kommunikationssystems KS sein, wobei der Server S über das Mobilfunknetz MN erreicht werden kann.

Der Server S kann im Mobilfunknetz MN angeordnet sein und kann von jedem der mobilen Endgeräte ME zumindest über seinen Nutzdatenkanal bzw. Datenkanal des Mobilfunknetzes MN erreicht werden. Ist das mobile Endgerät ME in einem GPS- Mobilfunknetz GSM subskribiert, wird vorzugsweise als Signalisierungskanal ein SIP- Protokoll (Session Initial Protocol) mit einem Daten- bzw. Nutzkanal realisiert, mit dessen Hilfe das mobile Endgerät ME dem Servers S bzw. der Applikation APPL mitteilt, ob es sich im Heim- Funkbereich HFB oder in dem weiteren Funkbereich FB2 aufhält. Bei einer Subskribierung des mobilen Endgeräts ME im UMTS- Mobilfunknetz UMTS ist ebenfalls das SIP- Protokoll SIP als Signalisierungsprotokoll vorgesehen und kann direkt für die Mitteilung über den Aufenthaltsbereich des mobilen Endgeräts ME benutzt werden.

Der Aufenthaltsbereich des mobilen Endgeräts ME wird durch eine Applikation A im mobilen Endgerät ME ermittelt. Hierbei ist in der Applikation A derjenige Funkbereich FB2 eingetragen, dem das mobile Endgerät ME als Heim- Funkbereich HFB zugeordnet ist. Der Heim- Funkbereich HFB ist beispielsweise durch eine Kennung über die Basisstation oder auch mehrere Basisstationen - nicht dargestellt - angegeben, die den Heim-Funkbereich HFB funktechnisch abdecken. Durch Vergleich der aktuell empfangenen Kennung über die Basisstation bzw. Basisstation und der der Applikation A zugeordneten Information über die Basisstation bzw. Basisstationen des Heim-Funkbereichs HFB wird ermittelt, ob sich das mobile Endgerät ME in seinem Heim-Funkbereich HFB befindet.

Erfindungsgemäß ist eine Erweiterung des standardisierten SIP- Protokolls SIP - insbesondere RFC- Standard 3261 - für die Mitteilung des Aufenthaltsbereichs des mobilen Endgeräts ME vorgesehen.

Gemäß einer ersten beispielhaften Variante wird die Information, die anzeigt, wo sich das mobile Endgerät ME befindet sich im Heim- Funkbereich HFB oder im weiteren Funkbereich FB, durch eine zusätzliche Information der in der Register-Request-Meldung enthaltenen Parameter "Contact" an den Server S übermittelt.

Die Register- Request- Meldung (RRM) ist wie folgt gebildet:
REGISTER sips:ss2.biloxi.example. com SIP/2.0
Via:SIP/2.0/TLS client.biloxi.example. com:5061;
branch=z9hG4bKnashds
Max-Forward: 70
From: Bob <sips:bob@biloxi.example>;tag=a73kszlfl
To: Bob <sips:bob@biloxi.example.com>
Call-ID: 1j9FpLxk3uxtm8tn@biloxi.example.com
CSeq: 1 REGISTERED MAIL
Contact: "Mr.Bob"
<sips:bob@client.biloxi.example.com>;q=0,7;
Expires=3600; **homezone=[IN,OUT]**
Content-Length: 0

Alternativ kann beispielsweise die Register- Request- Meldung (RRM) selbst wie folgt erweitert werden:
- REGISTER: sips:ss2.biloxi.example. com SIP/2.0
Via:SIP/2.0/TLS client.biloxi.example. com:5061;
branch=z9hG4bKnashds
Max-Forward: 70
From: Bob <sips:bob@biloxi.example>;tag=a73kszlfl
To: Bob <sips:bob@biloxi.example.com>
Call-ID: 1j9FpLxk3uxtm8tn@biloxi.example.com
CSeq: 1 REGISTERED MAIL
Contact: "Mr.Bob"
<sips:bob@client.biloxi.example.com>;q=0,7;
Expires=3600;
**homezone=[IN,OUT]**
Content-Length: 0

Mit Hilfe der Register- Request- Meldung RRM wird vom mobilen Endgerät ME gemeldet, ob es sich in seinem Heimfunkbereich HFB oder ob sich außerhalb seines Heimfunkbereichs HFB in einem weiteren Funkbereich FB des Mobilfunknetzes MN befindet.

Für das Ausführungsbeispiel sein angenommen, dass sich das mobile Endgerät ME zuerst in seinem Heim- Funkbereich HFB befindet. Erfindungsgemäß wird eine Register- Request- Meldung RRM gebildet und über das Mobilfunknetz MN an den Server S drahtlos übermittelt, wobei die Register- Request- Meldung RRM durch die Information IN angezeigt, dass es sich in seinem Heim- Funkbereich HFB befindet - in der Figur 1 durch einen mit RRM(IN) bezeichneten Pfeil angedeutet. In dem Server S wird die Information IN in einer Applikation APPL gespeichert und für das Kommunikationssystem KS zugänglich gemacht. Die Information IN wird dem Kommunikationssystem KS mit einer Statusanzeige innerhalb eines Presence- Service angezeigt, d.h. mit Hilfe dieser Information IN können die im Heim- Funkbereich HFB befindlichen mobilen Endgeräte ME in einen Service für bevorzugte Endgeräte ME einbezogen werden, der in dem Kommunikationssystem KS realisiert ist - nicht dargestellt.

An das mobile Endgerät ME adressierte Kommunikationsanforderungen KV werden direkt mit der Adresse bzw. Rufnummer des Heimfunkbereichs HFB weitergeleitet. Dies bedeutet, dass der Verbindungsaufbau bzw. Aufbau einer Session durch den Server S und das Kommunikationssystem KS, d.h. also im Netzwerk mit der Adresse bzw. Rufnummer des Heim- Funkbereichs HFB direkt an das mobile Endgerät ME gesteuert bzw. vermittelt wird - in Figur 1 durch mit der Bezeichnung KV versehene punktierte Linien angedeutet.

Für das Ausführungsbeispiel sei angenommen, dass das mobile Endgerät ME - durch gestricheltes Rechteck dargestellt - von dem Heim- Funkbereich HFB in einen weiteren Funkbereich FB2 bewegt wird, beispielsweise durch Ortswechsel des Benutzers des mobilen Endgeräts ME - siehe Figur 2. Nach Verlassen des Heim-Funkbereichs HFB wird dies durch die Applikation A im mobilen Endgerät ME erkannt und eine Register- Request- Meldung RRM gebildet und über das Mobilfunknetz MN an den Server S drahtlos übermittelt, wobei die Register- Request- Meldung RRM durch die Information OUT angezeigt, dass es sich nicht in seinem Heim- Funkbereich HFB befindet - in der Figur 1 durch einen mit RRM(OUT) bezeichneten Pfeil angedeutet. In dem Server S wird die Information OUT in der Applikation APPL gespeichert und dem Kommunikationssystem KS zugänglich gemacht. Hierzu wird die Information OUT dem Kommunikationssystem KS mit einer Statusanzeige innerhalb eines Presence- Service angezeigt - nicht dargestellt.

An das mobile Endgerät ME adressierte Kommunikationsanforderungen KV werden nun nicht mehr direkt an die Adresse bzw. Rufnummer des Heim- Funkbereichs HFB weitergeleitet. Erfindungsgemäß sind mehrere Varianten möglich, die Kommunikationsanforderung KV bzw. den eingeleiteten Verbindungsaufbau zu behandeln.

Eine Möglichkeit besteht darin, mit Hilfe einer Ansageeinrichtung dem anrufenden Endgerät ME im Rahmen des Verbindungsaufbaus bzw. des Aufbaus einer Session mitzuteilen, dass sich das mobile Endgerät ME nicht in seinem Heim- Funkbereich HFB befindet. Zusätzlich kann der Kommunikationsanforderung bzw. anrufenden Endgerät die Adresse bzw. Rufnummer des Mobilfunknetzes MN, in dem sich das mobile Endgerät ME befindet, mitgeteilt werden.

Eine weitere Möglichkeit besteht darin, dass der Kommunikationsanforderung bzw. eingeleitete Verbindungsaufbau bzw. Session mit der Adresse bzw. Rufnummer des mobilen Endgeräts ME im Mobilfunknetz MN an das mobile Endgerät ME gesteuert wird - in Figur 2 mit der Bezeichnung KV versehene punktierte Linien angedeutet. Hierdurch kann ein Roaming bzw. Weiterleiten der Kommunikationsanforderung KV von einem Funkbereich FB zu einem weiteren Funkbereich FB im Mobilfunknetz MN vermieden werden. Außerdem kann durch Verwendung von Unternehmensinternen Adressen bzw. Rufnummern von Mobilfunknetzen MN ein günstigerer Tarif für das Weiterleiten des Verbindungsaufbaus zu einem mobilen Endgerät ME MN erreicht werden.

Auch ein Nachrüsten von bereits eingesetzten mobilen Endgeräten ME ist möglich. Beispielsweise kann eine durch die objektorientierte Programmiersprache JAVA realisierte Applikation A im mobilen Endgerät ME die erfindungsgemäßen Funktionen wie Ermittlung des Aufenthalts im Heim- Funkbereich HFB und Mitteilung mittels einer Register- Request- Meldung RRM an den Server S bereitgestellt werden.

Ein geeigneter Daten- oder Nutzkanal kann beispielsweise auch durch GRPS oder SMS realisiert werden, je nach Leistungsumfang des Endgeräts. Hierdurch ist die Anwendung der Erfindung nicht auf bestimmte Endgräte, wie Mobiltelefone, beschränkt, sondern kann auch in Konfigurationen mit drahtlosen Endgeräten oder Festnetzendgeräten eingesetzt werden, in denen ein Heimbereich definiert werden kann und eine unterschiedliche Behandlung von Kommunikationsanforderung in Abhängigkeit von dem Aufenthalt des Endgeräts in Heimbereich oder außerhalb des Heimbereichs vorgesehen sind.

## Patentansprüche

1. Verfahren zum Vermitteln von Kommunikationsbeziehungen zu einem mobilen Endgerät (ME), das einem Funk-Heimbereich (FHB) eines Netzwerks (MN) zugeordnet ist, wobei über das Netzwerk (MN) Kommunikationsbeziehungen zu und von weiteren Netzwerken gesteuert werden können, mit folgenden Schritten:
a) das mobile Endgerät (ME) ermittelt, ob es sich im Heim-Funkbereich (HFB) des Netzwerks (MN) oder in einem weiteren Funkbereich (FB2) befindet; **dadurch gekennzeichnet**
b) der durch das mobile Endgerät (ME) ermittelte Funkbereich (HFB,FB2) wird durch das mobile Endgerät (ME) einer Applikation (APPL) des Netzwerks (MN) signalisiert;
c) mit Hilfe der Applikation (APPL) wird eine von einem weiteren Netzwerk (FN) an das mobile Endgerät (ME) adressierte Kommunikationsanforderung (KV) direkt an dessen Heim-Funkbereich (HFB) gesteuert, falls das mobile Endgerät (ME) sich im Heim-Funkbereich (HFB) des Netzwerks (MN) befindet;
d) falls das mobile Endgerät (ME) sich nicht im Heim-Funkbereich (HFB) des Netzwerks (MN) befindet, eine der folgenden Operationen ausgewählt wird: die adressierte Kommunikationsanforderung (KV) wird an das mobile Endgerät (ME) mit Hilfe der Applikation (APPL) direkt mit der Adresse eines Funknetzes, in dem sich das mobile Endgerät befindet, an den weiteren Funkbereich (FB2) weitergeleitet, oder der Kommunikationsanforderung (KV) wird angezeigt, dass sich das Endgerät (ME) nicht im Heim-Funkbereich (HFB) befindet.

2. Verfahren nach Anspruch 1, **dadurch gekennzeichnet,**
**dass** ein durch das mobile Endgerät (ME) ermittelter Heim-Funkbereich (HFB) oder ein weiterer Funkbereich (FB2) der Applikation (APPL) im Netzwerk (MN) durch ein netzwerkspezifisches Endgeräte-Protokoll signalisiert oder übermittelt wird.

3. Verfahren nach Anspruch 2, **dadurch gekennzeichnet,**
**dass** das netzwerkspezifische Endgeräte-Protokoll bei Netzwerken mit Internetprotokoll durch ein standardisiertes Session Initial Protocol (SIP) repräsentiert ist, wobei die Signalisierung durch eine erweitere Contact-Parameter aufweisende Register-Anforderung-Meldung (RRM) oder eine durch eine erweiterte Parameter aufweisende Register-Anforderung-Meldung (RRM) bewirkt wird.

4. Verfahren nach einem der Ansprüche 1 bis 3, **dadurch gekennzeichnet,**
**dass** ein durch das mobile Telefon-Endgerät ermittelter Funkbereich (FB2) in einem weiteren mobilen Netzwerk der Applikation (APPL) im Netzwerk (MN) über einen Signalisierungs- oder Datenkanal des weiteren Netzwerkes oder über weitere Netzwerke mitgeteilt wird.

5. Verfahren nach einem der Ansprüche 1 bis 4, **dadurch gekennzeichnet,**
**dass** der Heim-Funkbereich (HFB) durch eine Funkzelle eines drahtlosen Netzwerks oder eines Mobilfunknetzes (MN) realisiert ist, wobei dem Heim-Funkbereich (HFB) die Netzadresse eines zugeordneten Festnetzes zuordenbar ist.

6. Verfahren nach einem der Ansprüche 1 bis 5,
dass bei einer Kommunikationsanforderung aus einem Festnetz (FN) diese mit Hilfe der dem Heim-Funkbereich (HFB) zugeordneten Netzadresse des Festnetzes (FN) an das mobile Endgerät (ME) weitergeleitet wird, sofern sich das mobile Endgerät (ME) im Heim-Funkbereich (HFB) befindet.

7. Verfahren nach einem Ansprüche 1 bis 6, **dadurch gekennzeichnet,**
**dass** bei einer Kommunikationsanforderung aus einem Festnetz FN), sofern sich das mobile Endgerät (ME) nicht im Heim-Funkbereich (FHB) befindet,
- an die Kommunikationsanforderung eine Ansage übermittelt wird, dass sich das mobile Endgerät (ME) nicht im Heim-Funkbereich (HFB) befindet, wobei zusätzlich die Adresse des Kommunikationsnetzes mitgeteilt wird, in dessen Funkbereich (FB) sich das mobile Endgerät (ME) befindet oder
- die Kommunikationsanforderung an das Endgerät (ME) mit der Adresse des Netzwerks (MN) weitergeleitet wird, in dessen Funkbereich (FB2) sich das mobile Endgerät (ME) aktuell befindet.

8. Verfahren nach einem der vorhergehenden Ansprüche, **dadurch gekennzeichnet,**
**dass** im mobilen Endgerät (ME) einer Applikation (A) eine Kennung des Heim-Funkbereichs (HFB) zugeordnet ist, dass mit Hilfe der Applikation (A) die Kennung des Funkbereichs (FB) ermittelt wird, in der sich das mobile Endgerät (ME) befindet, dass die zugeordnete mit der ermittelten Kennung verglichen wird, und dass in Abhängigkeit von dem Vergleichsergebnis das mobile Endgerät (ME) sich im Heim-Funkbereich (HFB) befindlich oder nicht befindlich festgestellt ist, wobei die Kennung durch zumindest eine Kennung einer oder mehrerer den Heim-Funkbereich (HFB) realisierenden Funk-Basisstationen repräsentiert ist.

9. Verfahren nach einem der vorhergehenden Ansprüche, **dadurch gekennzeichnet,**
**dass** das mobile Endgerät (ME) durch ein Telefon-Endgerät (ME) oder durch ein mobiles Multimedia-Endgerät oder durch ein mobiles Endgerät eines Festnetzes repräsentiert ist.

10. Kommunikationsanordnung zur Durchführung des Verfahrens nach dem vorhergehenden Anspruch 1:
- mit einer Applikation (A) in dem mobilen Endgerät (ME) zum Ermitteln seines Aufenthalts im Heim-Funkbereich (HFB) oder in einem weiteren Funkbereich (FB2) und zum Signalisieren des ermittelten Heim-Funkbereichs (HFB) oder eines weiteres Funkbereichs (FB2) an eine Applikation (APPL) des Netzwerks (MN), und
- mit der Applikation (APPL) zum Steuern einer über ein weiteres Netzwerk (FN) an das mobile Endgerät (ME) adressierte Kommunikationsanforderung.

11. Kommunikationsanordnung nach Anspruch 10 mit der Applikation (APPL) zum Steuern einer über ein weiteres Netzwerk (FN) an das mobile Endgerät (ME) adressierte Kommunikationsanforderung
- entweder an dessen Heim-Funkbereich (HFB) oder
- zum Weiterleiten an den weiteren Funkbereich (FB2) oder
- zum Anzeigen der Kommunikationsbeziehung, dass sich das Telefon-Endgerät (ME) nicht im Heim-Funkbereich (HFB) befindet.

## Claims

1. Method for switching communication links to a mobile terminal device (ME) which is allocated to a local radio area (FHB) of a network (MN), wherein by means of the network (MN) communication links to and from other networks can be controlled, with the following steps:
a) the mobile terminal device (ME) determines whether it is in the local radio area (HFB) of the network (MN) or in another radio area (FB2); **characterised in that**
b) the radio area (HFB, FB2) determined by the mobile terminal device (ME) is signalled by the mobile terminal device (ME) to an application (APPL) of the network (MN);
c) with the help of the application (APPL), a communication request (KV) addressed by another network (FN) to the mobile terminal device (ME) is controlled directly on its local radio area (HFB) if the mobile terminal device (ME) is in the local radio area (HFB) of the network (MN);
d) if the mobile terminal device (ME) is not in the local radio area (HFB) of the network (MN), one of the following operations is selected: the addressed communication request (KV) is forwarded to the mobile terminal device (ME), by means of the application (APPL) directly with the address of a radio network in which the mobile terminal device is located, to the other radio area (FB2), or the communication request (KV) is informed that the terminal device (ME) is not in the local radio area (HFB).

2. Method according to claim 1 **characterised in that** a local radio area (HFB) determined by the mobile terminal device (ME) or another radio area (FB2) is signalled or transmitted to the application (APPL) in the network (MN) by a network-specific terminal device protocol.

3. Method according to claim 2 **characterised in that** the network-specific terminal device protocol is represented in networks with internet protocol by a standardised session initial protocol (SIP), wherein the signalling is effected by a register request message (RRM) having an expanded contact parameter or a register request message (RRM) having an expanded parameter.

4. Method according to any one of claims 1 to 3 **characterised in that** a radio area (FB2) determined by the mobile telephone terminal device is signalled in another mobile network of the application (APPL) in the network (MN) by means of a signalling or data channel of the other network or by means of other networks.

5. Method according to any one of claims 1 to 4 **characterised in that** the local radio area (HFB) is implemented by a radio cell of a wireless network or a mobile radio network (MN), wherein the network address of an allocated fixed-line network can be allocated to the local radio area (HFB).

6. Method according to any one of claims 1 to 5 **characterised in that** in the event of a communication request from a fixed-line network (FN), it is forwarded to the mobile terminal device (ME) with the help of the network address, allocated to the local radio area (HFB), of the fixed-line network (FN), provided that the mobile terminal device (ME) is in the local radio area (HFB).

7. Method according to any one of claims 1 to 6 **characterised in that**, in the event of a communication request from a fixed-line network (FN), provided that the mobile terminal device (ME) is not in the local radio area (FHB),
- an announcement is transmitted to the communication request that the mobile terminal device (ME) is not in the local radio area (HFB), whereby in addition the address is notified of the communication network in the radio area (FB) of which the mobile terminal device (ME) is located or
- the communication request to the terminal device (ME) is forwarded with the address of the network in the radio area (FB2) of which the mobile terminal device (ME) is currently located.

8. Method according to any one of the preceding claims **characterised in that**, in the mobile terminal device (ME) of an application (A), an identifier of the local radio area (HFB) is allocated, **in that** with the help of the application (A) the identifier of the radio area (FB) is determined, in which the mobile terminal device (ME) is located, **in that** the allocated identifier is compared with the determined identifier, and **in that** depending on the result of the comparison, the mobile terminal device (ME) is established as being located or not located in the local radio area (HFB), wherein the identifier is represented by at least one identifier of one or more radio base stations implementing the local radio area (HFB).

9. Method according to any one of the preceding claims **characterised in that** the mobile terminal device (ME) is represented by a telephone terminal device (ME) or by a mobile multi-media terminal device or by a mobile terminal device of a fixed-line network.

10. Communication arrangement for carrying out the method according to claim 1:
- with an application (A) in the mobile terminal device (ME) to determine its time in the local radio area (HFB) or in another radio area (FB2) and to signal the determined local radio area (HFB) or another radio area (FB2) to an application (APPL) of the network (MN), and
- with the application (APPL) for controlling a communication request addressed to the mobile terminal device (ME) over another network (FN).

11. Communication arrangement according to claim 10 with the application (APPL) for controlling a communication request addressed to the mobile terminal device (ME) over another network
- either to its local radio area (HFB) or
- for forwarding to the other radio area (FB2) or
- for notifying the communication link that the telephone terminal device (ME) is not in the local radio area (HFB).

## Revendications

1. Procédé de transmission de communications à un terminal mobile (ME) associé à une zone d'appel local (FHB) d'un réseau téléphonique (MN), des communications à et provenant d'autres réseaux téléphoniques pouvant être commandées par le réseau téléphonique (MN), présentant les étapes suivantes :
a) le terminal mobile (ME) déterminé s'il se trouve dans la zone d'appel local (HFB) du réseau téléphonique (MN) ou dans une autre zone d'appel (FB2) ; **caractérisé en ce que**
b) la zone d'appel (HFB, FB2) déterminée par le terminal mobile (ME) est signalée par le terminal mobile (ME) d'une application (APPL) du réseau téléphonique (MN) ;
c) l'application (APPL) permet de commander directement une demande de communication (KV) adressée par un autre réseau téléphonique (FN) au terminal mobile (ME) à sa zone d'appel local (HFB) si le terminal mobile (ME) se trouve dans la zone d'appel local (HFB) du réseau téléphonique (MN) ;
d) si le terminal mobile (ME) ne se trouve pas dans la zone d'appel local (HFB) du réseau téléphonique (MN), l'une des opérations suivantes est sélectionnée : la demande de communication adressée (KV) est transmise au terminal mobile (ME) à l'aide de l'application (APPL) directement avec l'adresse d'un réseau d'appel, dans lequel le terminal mobile se trouve, à l'autre zone d'appel (FB2) ou il est indiqué à la demande de communication (KV) que le terminal (ME) ne se trouve pas dans la zone d'appel local (HFB).

2. Procédé selon la revendication 1, **caractérisé en ce qu'**une zone d'appel local (HFB) déterminée par le terminal mobile (ME) ou une autre zone d'appel (FB2) de l'application (APPL) dans le réseau téléphonique (MN) est signalée ou transmise par un protocole de terminaux spécifique au réseau.

3. Procédé selon la revendication 2, **caractérisé en ce que** le protocole de terminaux spécifique au réseau est représenté pour des réseaux téléphoniques avec un protocole Internet par un protocole initial de session (SIP) standardisé, la signalisation étant provoquée par un message de demande de registre (RRM) présentant des paramètres de contact étendus ou un message de demande de registre (RRM) présentant des paramètres étendus (RRM).

4. Procédé selon l'une quelconque des revendications 1 à 3, **caractérisé en ce qu'**une zone d'appel (FB2) déterminée par le terminal téléphonique mobile dans un autre réseau téléphonique mobile de l'application (APPL) dans le réseau téléphonique (MN) est informée d'un canal de signalisation ou de données de l'autre réseau téléphonique ou est informée d'autres réseaux téléphoniques.

5. Procédé selon l'une quelconque des revendications 1 à 4, **caractérisé en ce que** la zone d'appel local (HFB) est réalisée par une cellule radio d'un réseau sans fil ou d'un réseau téléphonique mobile (MN), l'adresse réseau d'un réseau fixe associé pouvant être associée à la zone d'appel local (HFB).

6. Procédé selon l'une quelconque des revendications 1 à 5, **caractérisé en ce que** pour une demande de communication à partir d'un réseau fixe (FN), celle-ci est transmise à l'aide de l'adresse réseau associée à la zone d'appel local (HFB) du réseau fixe (FN) au terminal mobile (ME) dans la mesure où le terminal mobile (ME) se trouve dans la zone d'appel local (HFB).

7. Procédé selon l'une quelconque des revendications 1 à 6, **caractérisé en ce que** pour une demande de communication à partir d'un réseau fixe (FN), dans la mesure où le terminal mobile (ME) ne se trouve pas dans la zone d'appel local (FHB),
- une information est transmise à la demande de communication que le terminal mobile (ME) ne se trouve pas dans la zone d'appel local (HFB), l'adresse du réseau de communication étant en outre communiquée, dans la zone d'appel (FB) duquel le terminal mobile (ME) se trouve ou
- la demande de communication est transmise au terminal (ME) avec l'adresse du réseau téléphonique (MN) dans la zone d'appel duquel (FB2) se trouve actuellement le termine mobile (ME).

8. Procédé selon l'une quelconque des revendications précédentes, **caractérisé en ce qu'**une identification de la zone d'appel local (HFB) est associée dans le terminal mobile (ME) d'une application (A), **en ce qu'**à l'aide de l'application (A), l'identification de la zone d'appel (FB) est déterminée, dans laquelle se trouve le terminal mobile (ME), **en ce que** l'identification associée est comparée avec l'identification déterminée et **en ce qu'**en fonction du résultat de comparaison, le terminal mobile (ME) est constaté comme se trouvant ou pas dans la zone d'appel local (HFB), l'identification étant représentée par au moins une identification d'un ou de plusieurs postes de base d'appel réalisant la zone d'appel local (HFB) .

9. Procédé selon l'une quelconque des revendications précédentes, **caractérisé en ce que** le terminal mobile (ME) est représenté par un terminal téléphonique (ME) ou par un terminal multimédia mobile ou par un terminal mobile d'un réseau fixe.

10. Ensemble de communication pour la réalisation du procédé selon la revendication précédente 1 :
- avec une application (A) dans le terminal mobile (ME) pour la détermination de son séjour dans la zone d'appel local (HFB) ou dans une autre zone d'appel (FB2) et pour la signalisation de la zone d'appel local (HFB) déterminée ou d'une autre zone d'appel (FB2) à une application (APPL) du réseau téléphonique (MN), et
- avec l'application (APPL) pour la commande d'une demande de communication adressée par un autre réseau (FN) au terminal mobile (ME).

11. Ensemble de communication selon la revendication 10 avec l'application (APPL) pour la commande d'une demande de communication adressée par un autre réseau (FN) au terminal mobile (ME)
- à sa zone d'appel local (HFB) ou
- pour la transmission à l'autre zone d'appel (FB2) ou
- pour indiquer la communication que le terminal téléphonique (ME) ne se trouve pas dans la zone d'appel local (HFB).
